# EUROPÄISCHE PATENTSCHRIFT

(11) **EP 4 003 679 B1**
(45) Veröffentlichungstag und Bekanntmachung des Hinweises auf die Patenterteilung: **27.05.2026**
(21) Anmeldenummer: 20750165.1
(22) Anmeldetag: 15.07.2020
(51) Int. Cl.: B29B 7/66, B29B 17/00, B29B 17/04, B29B 17/02, B29C 43/52, B29C 31/04, B29C 35/02, B29C 43/04, B29C 43/34, B29K 105/26, B29K 105/08, B29K 105/24, B29K 307/04, B29B 7/88

(54) **VORRICHTUNG UND VERFAHREN ZUR AUFBEREITUNG VON VERBUNDWERKSTOFFABFÄLLEN**
DEVICE AND PROCESS FOR PREPARING COMPOSITE MATERIAL WASTE
DISPOSITIF ET PROCÉDÉ DE TRAITEMENT DE DÉCHETS DE MATIÈRES COMPOSITES

(30) Priorität: 25.07.2019 AT 506762019
(43) Veröffentlichungstag der Anmeldung: 01.06.2022
(73) Patentinhaber: Radanitsch, Jörg, 4810 Gmunden (AT)
(72) Erfinder: Radanitsch, Jörg, 4810 Gmunden (AT)
(74) Vertreter: Hübscher & Partner Patentanwälte GmbH
(86) Internationale Anmeldenummer: PCT/AT2020/060271
(87) Internationale Veröffentlichungsnummer: WO 2021/011976

(56) Entgegenhaltungen:
- EP-A1- 0 502 490
- WO-A1-2010/148418
- DE-A1- 2 550 879
- JP-A- H09 300 348
- US-A1- 2019 054 662
- US-B1- 6 258 877
- LIEBOLD R: "RECYCLING VON FORMTEILEN AUS FASERVERBUNDWERKSTOFFEN", KUNSTSTOFFBERATER : K : PRAXIS UND TECHNIK DER SPRITZGIESSVERARBEITUNG, KUNSTSTOFF-VERL, DE, vol. 39, no. 12, 1 December 1994 (1994-12-01), pages 28 - 33, XP000484423, ISSN: 0172-6374

## Beschreibung

### Technisches Gebiet

Die Erfindung bezieht sich auf eine Vorrichtung zur Aufbereitung von Verbundwerkstoffabfällen, insbesondere kohlenstofffaserverstärkten und glasfaserverstärkten Abfällen, mit einem Zerkleinerungsaggregat für die Verbundwerkstoffabfälle, einer nachgeschlossenen Temperierzone zur Temperierung der zerkleinerten Verbundwerkstoffabfälle, wobei die Temperatur in der Temperierzone (3) einstellbar ist, und mit einem Umformaggregat zur Erzeugung von Verbundwerkstoffabfallpresslingen. Die Erfindung bezieht sich des Weiteren auf ein Verfahren zur Aufbereitung von Verbundwerkstoffabfällen, insbesondere kohlenstofffaserverstärkten Abfällen, bei dem die Verbundwerkstoffabfälle in einem ersten Verfahrensschritt durch ein Zerkleinerungsaggregat zerkleinert, anschließend in einer Temperierzone temperiert, wobei die Temperatur in der Temperierzone einstellbar ist, und in weiterer Folge durch ein Umformaggregat zu Verbundwerkstoffabfallpresslingen gepresst werden.

### Stand der Technik

Verbundwerkstoffe sind aus mehreren Materialien bestehende Werkstoffe, deren Materialeigenschaften sich von jenen, der jeweils einzelnen Materialien unterscheiden. Weitgehend bekannte Verbundwerkstoffe bilden dabei kohlenstofffaserverstärkte Kunststoffe (CFK), umgangssprachlich Kohlefaser oder Carbon, die im Wesentlichen aus in eine Kunststoffmatrix eingebettete Kohlenstofffasern bestehen und glasfaserverstärkte Kunststoffe (GFK), die aus in eine Kunststoffmatrix eingebetteten Glasfasern bestehen. Für die Fertigung von CFK- und GFK-Bauteilen ist es bekannt, Prepregs einzusetzen. Prepregs sind Faser-Matrix-Halbzeuge, die erst durch Druck- und Temperaturbehandlung aushärten bzw. vernetzen und deren gewünschte Materialeigenschaft erhalten. Üblicherweise sind solche Prepregs auf großen Rollen aufgewickelt und werden je nach Bedarf vom Fertiger zugeschnitten, wodurch es klarerweise zu großen Mengen an Verschnitt kommt. Je nach Prepreg-Art weisen diese jedoch diverse Zusatzstoffe, wie Lösungsmittel auf, die allerdings leicht entzündbar sind, zu Hautreizungen führen und beim Eindringen in die menschlichen Atemwege tödlich sein können. Verbundwerkstoffe, insbesondere Prepregs müssen demnach ordnungsgemäß entsorgt bzw. recycelt werden.

Aus der US20190054662A1 ist hierzu ein Verfahren zum Recyceln von unvernetzten, kohlenstofffaserverstärkten Prepregs bekannt, bei dem unvernetzte Prepreg-Abfälle zuerst geschreddert, danach in eine Gussform gefüllt und schlussendlich einer heißen Formgebung unterzogen werden. Nachteilig daran ist allerdings, dass das Verfahren lediglich auf unvernetzte kohlenstofffaserverstärkte Prepregs ausgerichtet ist. Im Rahmen der Fertigung bzw. Wiederverwertung von Verbundwerkstoffen fallen allerdings Abfälle unterschiedlicher Beschaffenheit an, deren gefahrenlose Verarbeitung von bisher vorbekannten Verfahren bzw. Vorrichtungen nicht ohne kostspielige Erweiterungen bewerkstelligt werden kann. Vor allem kleinere Unternehmen können sich solche Spezialvorrichtungen bzw. Spezialverfahren nicht leisten, weswegen oftmals eine Deponierung der Abfälle bevorzugt wird. Dies hat allerdings wiederum den Nachteil, dass flüchtige, toxische Komponenten bereits beim Transport zu den Deponien unbehandelt freigegeben werden.

Die DE4106942A1 zeigt eine Vorrichtung zur Aufbereitung von Kunststoffabfällen mit einem Zerkleinerungsaggregat und einem Extruder. Die einzelnen Fertigungseinheiten sind dabei jede für sich in einer Transporteinheit von der Umgebung abgeschlossen. Nachteilig daran ist, dass ein Umformen von Verbundwerkstoffabfällen mittels Extruder einerseits wegen dem ausgehärtetem Zustand der Verbundwerkstoffabfälle und andererseits wegen deren Restfaserbestand nicht möglich ist. Darüber hinaus verlangt die Vorrichtung eine Assemblierung der einzelnen Fertigungseinheiten einen Fachmann, da sonst etwaige flüchtigen toxischen Stoffe, bei nicht ordnungsgemäßer Assemblierung, an die Umgebung abgegeben werden könnte.

Aus der EP2108495A1 sind Vorrichtungen zum Verdichten von Verbundwerkstoffabfällen mit einem Umformaggregat zur Erzeugung von Verbundwerkstoffabfallpresslingen bekannt. Dem Umformaggregat können eine Temperierzone und ein Zerkleinerungsaggregat nachgeschlossen sein.

US6258877B1 offenbart eine Vorrichtung zum Aufbereiten von Dachmaterial. Hierzu ist ein Zerkleinerungsaggregat in einem von einem Sattelzug gebildeten, offenen Arbeitsraum angeordnet. Dem Zerkleinerungsaggregat ist ein Mischer zum Mischen des zerkleinerten Guts mit thermoplastischen Partikeln und Füllstoffen nachgelagert. Diese Mischung kann über ein Umformaggregat zu einem Block geformt werden. LIEBOLD R: "RECYCLING VON FORMTEILEN AUS FASERVERBUNDWERKSTOFFEN" (KUNSTSTOFFBERATER K PRAXIS UND TECHNIK DER SPRITZGIESSVERARBEITUNG, KUNSTSTOFF-VERL, DE, Bd. 39, Nr. 12, 1. Dezember 1994 (1994-12-01), XP000484423, ISSN: 0172-6374) offenbart eine Vorrichtung und ein Verfahren zur Aufbereitung von Verbundwerkstoffabfällen. Auch hier ist ein Zerkleinerungsaggregat in einem von einem Sattelzug gebildeten, offenen Arbeitsraum angeordnet. Nach der Zerkleinerung wird das zerkleinerte Gut zu stationären Aufbereitungsanlagen transportiert. Vor allem, wenn die zu verarbeitenden Materialien giftige Stoffe umfassen, werden diese bei der Verarbeitung durch die obigen Vorrichtungen ungehindert an die Umgebung freigegeben.

### Darstellung der Erfindung

Der Erfindung liegt somit die Aufgabe zugrunde, eine Vorrichtung der eingangs geschilderten Art vorzuschlagen, die auch Unternehmen ohne Recycelanlagen unabhängig von der Art der Verbundwerkstoffabfälle eine kosten- und umweltschonende Alternative zur Deponierung von schädlichen Verbundwerkstoffabfällen in Mülldeponien bietet.

Die Erfindung löst die gestellte Aufgabe dadurch, dass das Zerkleinerungsaggregat, die Temperierzone und das Umformaggregat in einem zumindest im Wesentlichen hermetisch abgeschlossenen und transportablen Arbeitsraum angeordnet sind, wobei der Arbeitsraum im Wesentlichen hermetisch von seiner Umgebung abgetrennt ist und durch Schleusen oder Klappen zum Be- und Entladen, bzw. durch Öffnungen für Frischluft- bzw. Abluftleitungen durchbrochen ist. Zufolge dieser Maßnahmen kann die Vorrichtung temporär und lokal ungebunden von unterschiedlichen Unternehmen in Anspruch genommen werden. Die mobile Vorrichtung kann beispielsweise angemietet werden, wobei auch eine Etablierung eines kommunalen Abfallwirtschaftringes denkbar ist, wenn der transportable Arbeitsraum als Container auf beispielsweise einem LKW ausgebildet ist. Damit die Vorrichtung an einem beliebigen Ort, ohne weitere Sicherungsvorkehrungen treffen zu müssen, abgestellt werden kann, ist der Arbeitsraum im Wesentlichen hermetisch von seiner Umgebung abgetrennt. Im Wesentlichen soll hier bedeuten, dass Schleusen oder Klappen zum Be- und Entladen, bzw. Öffnungen für Frischluft- bzw. Abluftleitungen und dergleichen vorgesehen sein können, die den Arbeitsraum durchbrechen. Der Arbeitsraum bietet dabei einen kompakten und transportablen Raum für ein Zerkleinerungsaggregat, das beispielsweise als Schredder oder Guillotine ausgebildet sein kann. Naturgemäß können auch andere für den Fachmann naheliegende Zerkleinerungsaggregate, sowie eine Kombination bekannter Zerkleinerungsaggregate vorgesehen sein. Vorteilhafte Bedingungen hinsichtlich einer rückstandslosen und effizienten Zerkleinerung ergeben sich, wenn dem Zerkleinerungsaggregat eine Düse zum Eintrag von Sprühnebel zugeordnet ist, wodurch der beim Zerkleinern entstehende Staub gebunden werden kann. Außerdem kann es vorteilhaft sein, wenn das Zerkleinerungsaggregat, bzw. ein Abschnitt des Gehäuses in dem das Zerkleinerungsaggregat angeordnet ist, gekühlt ist, wodurch eine Zerkleinerung von noch nicht ausgehärteten Verbundwerkstoffabfällen begünstigt wird. Die ebenfalls im Arbeitsraum angeordnete Temperierzone ist ein Reaktionsraum in dem der zerkleinerte Verbundwerkstoffabfall thermisch und/oder chemisch behandelt wird. Bevorzugt wird die Temperatur der Temperierzone, sowie die Verweilzeit des Verbundwerkstoffabfalles in der Temperierzone so gewählt, dass die toxischen Schadstoffe, beispielsweise Lösungsmittel, ausgetrieben werden. Dadurch kommt es zur Vernetzung der Prepregs und zur erfindungsgemäßen Reduktion der Toxizität und Entzündbarkeit der Verbundwerkstoffabfälle aller Arten. Um lediglich eine Aushärtung und keine Verbrennung der Verbundwerkstoffkomponenten, wie beispielsweise Kunstharze, zu erzielen, wird die Temperatur in der Temperierzone in Anhängigkeit des Verbundwerkstoffabfalles variiert, um ein aufbereitetes Produkt mit möglichst hohem Heizwert, das beispielsweise als Reduktionsmittel, Kohlenstoffträger, Aufkohlungsmittel bzw. Brennstoff in der Hochofenroute oder im Stahlwerk eingesetzt werden kann, zu erlangen. Das in der Prozesskette der Temperierzone nachgeordnete Umformaggregat kann im einfachsten Fall eine Pelletierpresse sein, wiewohl es auch denkbar ist, dass das Umformaggregat nur zur Konfektionierung, daher zum Befüllen von Abfallsäcken mit ungepressten Verbundwerkstoffabfällen, eingesetzt wird. Soll die Konfektionierung von ungepressten Verbundwerkstoffabfällen erfolgen, so kann eine Anordnung einer Rüttelplatte, eines Backenbrechers oder eines Schredders zwischen Temperierzone und Umformaggregat vorgesehen sein, wodurch die Rieselfähigkeit des Verbundwerkstoffabfalles erhöht wird.

Um die behördlich vorgegebenen Jahres- und Tagesmittelwerte hinsichtlich der für die menschliche Gesundheit gefährliche, insbesondere lungengängige Schadstoffe einzuhalten, wird vorgeschlagen, dass dem Zerkleinerungsaggregat ein Partikelabscheider zum Abscheiden der beim Zerkleinern erzeugten Stäube zugeordnet ist, wobei eine Förderleitung mit dem Partikelabscheider verbunden ist, um den beim Zerkleinern entstandenen Staub abzuscheiden. Die Förderleitung kann dabei als abgeschlossener Kreislauf innerhalb des Arbeitsraumes ausgebildet sein. Da es jedoch beispielsweise beim Zerkleinern zu einer starken Wärmeentwicklung kommen kann, kann die Förderleitung den Arbeitsraum an einer ersten Frischluftzufuhrleitung durchbrechen und diese Frischluftzufuhrleitung über das Zerkleinerungsaggregat mit dem Partikelabscheider verbinden. Die angesaugte Luft dient in diesem Fall zum Kühlen des Zerkleinerungsaggregates und transportiert gleichzeitig die entstandenen Stäube zum Partikelabscheider, wo die lungengängigen Schadstoffe abgeschieden werden. Die gereinigte Luft wird entweder innerhalb des Arbeitsraumes im Kreis geführt, oder verlässt diesen über eine Abluftleitung. Als Partikelabscheider können beispielsweise Zyklone oder filternde Abscheider vorgesehen sein. Vorteilhafterweise sind die filternden Abscheider als Keramikfilter ausgebildet, da dadurch eine statische Aufladung durch die kohlenstoff- und glasfaserverstärkten Abfälle vermieden und ein Abreinigen des entstandenen Filterkuchens begünstigt wird.

Damit auch bei einer Aufbereitung von Verbundwerkstoffabfällen unterschiedlicher Materialbeschaffenheit ein möglichst homogenes Produkt erzeugt und gleichzeitig die Prozesskette so ausgestaltet werden kann, dass die Produktausbeute der erfindungsgemäßen Vorrichtung bzw. des damit verbundenen Verfahrens maximiert wird, kann der Partikelabscheider eine Dosiervorrichtung zum Zuschlagen der, gegebenenfalls mit einem Bindemittel versetzten, abgeschiedenen Partikel zu den zerkleinerten Verbundwerkstoffabfällen aufweisen. Dadurch wird der beim Zerkleinern entstandene Staub wieder in den Prozess eingebracht, verwertet und wirkt dabei, vor allem, wenn dieser mit einem Bindemittel bzw. mit Wasser versetzt wird, als Klebemittel für die chemisch und thermisch behandelten Verbundwerkstoffabfälle. Auf diese Weise können auch stark unterschiedliche Verbundwerkstoffabfälle, wie Prepregs, Fasermaterialien, Harzreste und zu recycelnde Waren zu einem homogenen Endprodukt verwertet werden.

Prozesstechnisch besonders günstige Bedingungen ergeben sich, wenn die Temperierzone eine Fördervorrichtung zur Förderung der zerkleinerten Verbundwerkstoffabfälle durch die Temperierzone zum Umformaggregat aufweist. Die Fördervorrichtung kann beispielsweise eine Förderschnecke, ein Förderband oder ein Schwingförderer sein. Letzterer kann auch zum Klassieren von Verbundwerkstoffabfällen unterschiedlicher Korngrößen eingesetzt werden.

Um eine einfache Entnahme von dem aufbereiteten Produkt aus der Vorrichtung zu ermöglichen, wird vorgeschlagen, dass an den Arbeitsraum ein über eine Schleuse angeschlossener Lagerraum zur Zwischenlagerung der Verbundwerkstoffabfallpresslinge vorgesehen ist. Der Lagerraum ist demnach vom eigentlichen Arbeitsraum abgetrennt, wodurch ein gefahrenloses Begehen desselbigen jederzeit möglich ist. Die Schleuse kann im einfachsten Fall eine abgedichtete Klappe sein. Die Entnahme des konfektionierten Produktes kann entweder chargenweise oder kontinuierlich erfolgen. In einer bevorzugten Ausführung der erfindungsgemäßen Vorrichtung, kann der Lagerraum temperiert werden, wodurch eine vollständige Vernetzung bzw. Aushärtung der verpackten und aufbereiteten Verbundwerkstoffabfälle gewährleistet wird. Auf diese Weise können beispielsweise noch nicht vollständig ausgehärtete Verbundwerkstoffabfälle vor dem Umformen bzw. Pressen als Bindemittelersatz eingesetzt werden. Die vollständige Vernetzung wird in diesem Fall erst im Lagerraum erzielt.

Damit die Vorrichtung weitgehend automatisiert betrieben werden kann, empfiehlt es sich in einer besonders praktikablen Ausführungsform der erfindungsgemäßen Vorrichtung, dass dem Zerkleinerungsaggregat, der Temperierzone und dem Partikelabscheider mit einer Regelungseinheit verbundene Sensoren zur Messungen von Verbundwerkstoffabfall- und Prozessparametern zugeordnet sind, wobei die Betriebsparameter wenigstens des Zerkleinerungsaggregates, in der Temperierzone und des Umformaggregates in Abhängigkeit der gemessenen Prozessparameter über die Regelungseinheit regelbar sind. Prozessparameter können beispielsweise die Umdrehungszahlen der in dem Zerkleinerungsaggregat eingesetzten Rotoren sein, die Temperatur in der Temperierzone und im Zerkleinerungsaggregat, die Fördergeschwindigkeit der in der Temperierzone angeordneten Fördervorrichtung, die Verweilzeit der Verbundwerkstoffabfälle in der Temperierzone, der vom Umformaggregat beaufschlagte Druck zur Erzeugung der Verbundwerkstoffabfallpresslinge, der Druckabfall im Partikelabscheider, Schadstoffkonzentration bzw. Beladung der Abluft und andere für den Fachmann naheliegende und für die Prozessregelung relevante Prozessparameter sein. Verbundwerkstoffabfallparameter können beispielsweise Partikeldurchmesser, Schüttdichte, Brennwert und andere für den Fachmann naheliegende und für die Beurteilung der Verbundwerkstoffabfallcharakteristik relevante Verbundwerkstoffabfallparameter sein. Die aufgezeichneten Daten werden von der Regelungseinheit aufgenommen, verarbeitet und anhand vorgegebener Sollwerte zur Einstellung der Betriebsparameter verwendet. Die Sollwerte können dabei je nach Verbundwerkstoffabfallart variieren.

Die Vorrichtung kann zum Durchführen eines Verfahrens zur Aufbereitung von Verbundwerkstoffabfällen, insbesondere kohlenstofffaserverstärkten und glasfaserverstärkten Abfällen, bei dem die Verbundwerkstoffabfälle in einem ersten Verfahrensschritt durch ein Zerkleinerungsaggregat zerkleinert, anschließend in einer Temperierzone temperiert, wobei die Temperatur in der Temperierzone einstellbar ist, und in weiterer Folge durch ein Umformaggregat zu Verbundwerkstoffabfallpresslingen gepresst werden, dadurch gekennzeichnet, dass die Verfahrensschritte des Zerkleinerungsaggregats, der Temperierzone und des Umformaggregats in einem zumindest im Wesentlichen hermetisch abgeschlossenen und transportablen Arbeitsraum durchgeführt werden, wobei der Arbeitsraum im Wesentlichen hermetisch von seiner Umgebung abgetrennt ist und durch Schleusen oder Klappen zum Be- und Entladen, bzw. durch Öffnungen für Frischluft- bzw. Abluftleitungen durchbrochen ist, eingesetzt werden.

Damit die Wertschöpfung bei der Aufbereitung der Verbundwerkstoffabfälle erhöht werden kann, wird vorgeschlagen, dass der beim Zerkleinern der Verbundwerkstoffabfälle entstehende Staub abgesaugt und in einem Partikelabscheider abgeschieden wird, wonach der abgeschiedene Staub über eine Dosiervorrichtung zerkleinerten Verbundwerkstoffabfällen zugeschlagen wird.

Eine weitgehende automatisierte Regelung des erfindungsgemäßen Verfahrens kann dann erreicht werden, wenn die Regelung der Betriebsparameter wenigstens des Zerkleinerungsaggregates, in der Temperierzone und des Umformaggregates über eine Regelungseinheit in Abhängigkeit von durch Sensoren aufgenommenen Verbundwerkstoffabfall- und Prozessparametern erfolgt.

Die Regelung des erfindungsgemäßen Verfahrens gestaltet sich hierbei besonders exakt, wenn auf Basis der von den Sensoren aufgenommenen Verbundwerkstoffabfall- und Prozessparametern eine auf einer Recheneinheit hinterlegte Prozesssimulation durchgeführt wird, wonach durch Parametervariation die virtuellen Betriebsparameter optimiert werden und gefundene Lösungen zur Regelung des Zerkleinerungsaggregats, der Betriebsparameter der Temperierzone und des Umformaggregates mit der Regelungseinheit verwendet werden. Auf Basis der Verbundwerkstoffabfallparameter wird ein sogenannter virtueller Zwilling des aufzubereitenden Verbundwerkstoffabfalles modelliert, dessen Aufbereitung mittels Prozesssimulation und der aufgenommenen Betriebsparameter berechnet wird. Durch Parametervariation können die zum Erreichen vorgegebener Sollwerte, beispielsweise Heizwert des aufbereiteten Produktes oder Grenzwerte über die Abluft abgegebener Schadstoffe, notwendigen Betriebsparameter errechnet werden und von der Regelungseinheit zur Regelung der realen Aggregate (Zerkleinerungsaggregat, Temperierzone, Fördervorrichtung, Umformaggregat, Partikelabscheider) verwendet werden. Die errechneten Daten zur Prozessoptimierung können auf einem zentralen Speicher hinterlegt werden und zur Regelung des erfindungsgemäßen Verfahrens anderer erfindungsgemäßer Vorrichtungen verwendet werden. Dadurch können eine Vielzahl erfindungsgemäßer Vorrichtungen miteinander kommunizieren und im Sinne einer künstlichen Intelligenz voneinander lernen, wodurch eine ständige Prozessoptimierung erreicht wird. Es muss wohl nicht näher erläutert werden, dass die erwähnte Prozesssimulation mit Hilfe eines virtuellen Zwillings nicht auf ein Verfahren zur Aufbereitung von Verbundwerkstoffabfällen, insbesondere kohlenstofffaserverstärkten Abfällen, beschränkt ist.

### Kurze Beschreibung der Erfindung

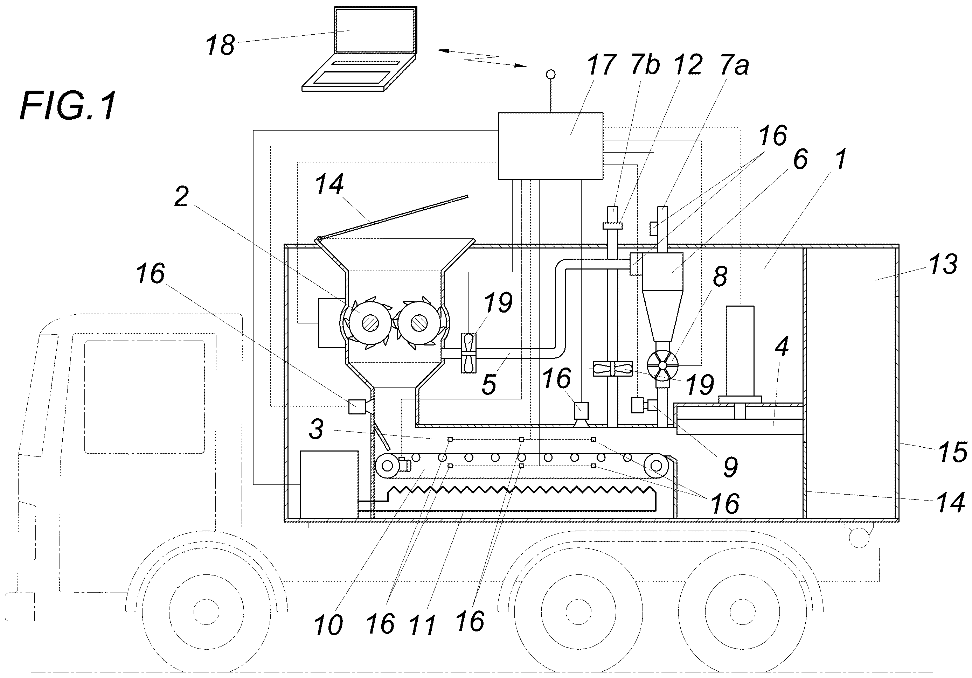

In der Zeichnung ist der Erfindungsgegenstand beispielsweise dargestellt. Es zeigen
Fig. 1 eine erfindungsgemäße Vorrichtung zur Aufbereitung von Verbundwerkstoffabfällen, insbesondere kohlenstofffaserverstärkten Abfällen in teilgeschnittener Seitenansicht und
Fig. 2 eine weitere Ausführungsform der Vorrichtung, wobei aus Übersichtlichkeitsgründen der Partikelabscheider und der LKW zum Transportieren der Vorrichtung nicht dargestellt sind.

### Wege zur Ausführung der Erfindung

Eine erfindungsgemäße Vorrichtung weist einen im Wesentlichen hermetisch abgeschlossenen und transportablen Arbeitsraum 1 auf, in dem ein Zerkleinerungsaggregat 2, eine Temperierzone 3 und ein Umformaggregat 4, das auch zur ausschließlichen Konfektionierung des Verbundwerkstoffabfalles eingesetzt werden kann, angeordnet sind.

Das Zerkleinerungsaggregat 2 ist über eine Förderleitung 5 mit einem Partikelabscheider 6, beispielsweise ein filternder Abscheider, verbunden, wodurch der beim Zerkleinern entstandene Staub abgeschieden und nicht über die Abluftleitung 7a ausgetragen wird.

Dem Partikelabscheider 6 kann dabei eine Dosiervorrichtung 8 zugeordnet sein, die den abgeschiedenen Staub, nachdem dieser mit einem aus einem Bindemittelvorratsbehälter 9 entnommenen Bindemittel vermischt wurde, auf die zerkleinerten Verbundwerkstoffabfälle aufbringt.

Die Temperierzone 3 weist eine Fördervorrichtung 10 zur Förderung der zerkleinerten Verbundwerkstoffabfälle durch die Temperierzone 3 zum Umformaggregat 4 auf. Die Einstellung der Temperatur in der Temperierzone kann über eine Heizschlange 11 erfolgen. Die Temperiervorrichtung ist als Reaktionsraum anzusehen, in dem toxische Stoffe aus dem Verbundwerkstoffabfall ausgetrieben und thermisch behandelt werden. Die ausgetriebenen Gase verlassen über eine Abluftleitung 7b den Arbeitsraum 1, nachdem sie gegebenenfalls von einem Luftreinigungssystem 12 nachbehandelt wurden.

An den Arbeitsraum 1 kann zudem ein Lagerraum 13 anschließen, der analog zum Zerkleinerungsaggregat 2 durch eine als Schleuse fungierende Klappe 14 vom Arbeitsraum 1 abgetrennt ist. Der Zugang zum Lagerraum 13 wird durch einen Zugang 15 ermöglicht.

Für eine weitgehende Automatisierung und Optimierung der Prozessregelung sind dem Zerkleinerungsaggregat 2, der Temperierzone 3, dem Partikelabscheider 6 Sensoren 16 zur Messungen von Verbundwerkstoffabfall- und Prozessparametern zugeordnet, die mit einer Regelungseinheit 17 verbunden sind. Die Regelungseinheit 17 kann die ermittelten Daten an eine Recheneinheit 18 übermitteln und anhand vorgegebener Sollwerte das Zerkleinerungsaggregat 2, die Temperierzone 3, die Fördervorrichtung 10, das Umformaggregat 4, den Partikelabscheider 6, Strömungsmaschinen 19 und etwaige nicht eingezeichnete Ventile regeln. Über die Recheneinheit 18 kann zudem mit anderen Recheneinheiten anderer erfindungsgemäßen Vorrichtungen kommuniziert werden, deren ermittelte Daten ebenfalls zur Prozessoptimierung verwendet werden können.

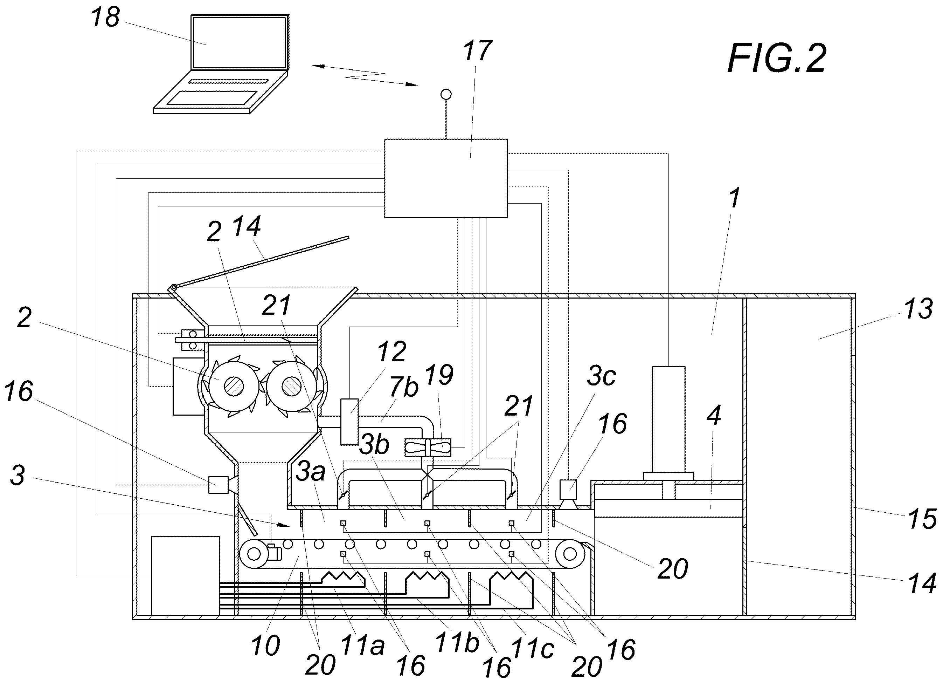

Wie der Fig. 2 zu entnehmen ist, kann die Temperierzone 3 durch fakultative Trennvorrichtungen 20 in mehrere Temperierzonen 3a, 3b, 3c unterschiedlicher Temperatur aufgeteilt werden. Die einzelnen Temperierzonen 3a, 3b, 3c werden von jeweils zugeordneten Heizschlangen 11a, 11b, 11c temperiert. Die Luft- bzw. Prozessgasführung kann über Ventile 21 der Abluftleitung 7b geregelt werden, sodass Prozessgas unterschiedlicher Temperatur durch das Luftreinigungssystem 12 in das Gehäuse des Zerkleinerungsaggregats 2 rückgeführt werden kann. Auf diese Weise kann die Aushärtung und Vernetzung der Verbundwerkstoffabfälle, insbesondere kohlenstofffaserverstärkten Abfälle über die Prozessgaszirkulation geregelt werden.

In der Fig. 2 ist außerdem eine mögliche Kombination mehrerer Zerkleinerungsaggregate 2 verdeutlicht. In diesem Fall wird eine Guillotine für nicht ausgehärtete Materialien, insbesondere Prepregs, gefolgt von einem Schredder für ausgehärtete Materialien eingesetzt.

## Patentansprüche

1. Vorrichtung zur Aufbereitung von Verbundwerkstoffabfällen, insbesondere kohlenstofffaserverstärkten Abfällen, mit einem Zerkleinerungsaggregat (2) für die Verbundwerkstoffabfälle, einer nachgeschlossenen Temperierzone (3) zur Temperierung der zerkleinerten Verbundwerkstoffabfälle, und mit einem Umformaggregat (4) zur Erzeugung von Verbundwerkstoffabfallpresslingen, **dadurch gekennzeichnet, dass** das Zerkleinerungsaggregat (2), die Temperierzone (3) und das Umformaggregat (4) in einem zumindest im Wesentlichen hermetisch abgeschlossenen und transportablen Arbeitsraum (1) angeordnet sind, wobei der Arbeitsraum (1) im Wesentlichen hermetisch von seiner Umgebung abgetrennt ist und durch Schleusen oder Klappen (14) zum Be- und Entladen, bzw. durch Öffnungen für Frischluft- bzw. Abluftleitungen (7a) durchbrochen ist,
und dass die Temperatur in der Temperierzone (3) einstellbar ist.

2. Vorrichtung zur Aufbereitung von Verbundwerkstoffabfällen nach Anspruch 1, **dadurch gekennzeichnet, dass** dem Zerkleinerungsaggregat (2) ein Partikelabscheider (6) zum Abscheiden der beim Zerkleinern erzeugten Stäube zugeordnet ist, wobei eine Förderleitung (5) mit dem Partikelabscheider (6) verbunden ist, um den beim Zerkleinern entstandenen Staub abzuscheiden.

3. Vorrichtung zur Aufbereitung von Verbundwerkstoffabfällen nach Anspruch 2, **dadurch gekennzeichnet, dass** der Partikelabscheider (6) eine Dosiervorrichtung (8) zum Zuschlagen der, gegebenenfalls mit einem Bindemittel versetzten, abgeschiedenen Partikel zu den zerkleinerten Verbundwerkstoffabfällen aufweist.

4. Vorrichtung zur Aufbereitung von Verbundwerkstoffabfällen nach einem der Ansprüche 1 bis 3, **dadurch gekennzeichnet, dass** die Temperierzone eine Fördervorrichtung (10) zur Förderung der zerkleinerten Verbundwerkstoffabfälle durch die Temperierzone (3) zum Umformaggregat (4) aufweist.

5. Vorrichtung zur Aufbereitung von Verbundwerkstoffabfällen nach einem der Ansprüche 1 bis 4, **dadurch gekennzeichnet, dass** an den Arbeitsraum (1) ein über eine Schleuse angeschlossener Lagerraum (13) zur Zwischenlagerung der Verbundwerkstoffabfallpresslinge vorgesehen ist.

6. Vorrichtung zur Aufbereitung von Verbundwerkstoffabfällen nach einem der Ansprüche 2 bis 5, **dadurch gekennzeichnet, dass** dem Zerkleinerungsaggregat (2), der Temperierzone (3) und dem Partikelabscheider (6) mit einer Regelungseinheit verbundene Sensoren (16) zur Messungen von Verbundwerkstoffabfall- und Prozessparametern zugeordnet sind, wobei die Betriebsparameter wenigstens des Zerkleinerungsaggregates (2), in der Temperierzone (3) und des Umformaggregates (4) in Abhängigkeit der gemessenen Prozessparameter über die Regelungseinheit regelbar sind.

7. Verfahren zur Aufbereitung von Verbundwerkstoffabfällen, insbesondere kohlenstofffaserverstärkten Abfällen, bei dem die Verbundwerkstoffabfälle in einem ersten Verfahrensschritt durch ein Zerkleinerungsaggregat (2) zerkleinert, anschließend in einer Temperierzone (3) temperiert, und in weiterer Folge durch ein Umformaggregat (4) zu Verbundwerkstoffabfallpresslingen gepresst werden, **dadurch gekennzeichnet, dass** die Verfahrensschritte des Zerkleinerungsaggregats (2), der Temperierzone (3) und des Umformaggregats (4) in einem zumindest im Wesentlichen hermetisch abgeschlossenen und transportablen Arbeitsraum (1) durchgeführt werden, wobei der Arbeitsraum (1) im Wesentlichen hermetisch von seiner Umgebung abgetrennt ist und durch Schleusen oder Klappen (14) zum Be- und Entladen, bzw. durch Öffnungen für Frischluft- bzw. Abluftleitungen (7a) durchbrochen ist,
und dass die Temperatur in der Temperierzone einstellbar ist.

8. Verfahren zur Aufbereitung von Verbundwerkstoffabfällen nach Anspruch 7, **dadurch gekennzeichnet, dass** der beim Zerkleinern der Verbundwerkstoffabfälle entstehende Staub abgesaugt und in einem Partikelabscheider (6) abgeschieden wird, wonach der abgeschiedene Staub über eine Dosiervorrichtung (8) zerkleinerten Verbundwerkstoffabfällen zugeschlagen wird.

9. Verfahren zur Aufbereitung von Verbundwerkstoffabfällen nach Anspruch 7 oder 8, **dadurch gekennzeichnet, dass** die Regelung der Betriebsparameter wenigstens des Zerkleinerungsaggregates (2), in der Temperierzone (3) und des Umformaggregates (4) über eine Regelungseinheit (17) in Abhängigkeit von durch Sensoren (16) aufgenommenen Verbundwerkstoffabfall- und Prozessparametern erfolgt.

10. Verfahren zur Aufbereitung von Verbundwerkstoffabfällen nach Anspruch 9, **dadurch gekennzeichnet, dass** auf Basis der von den Sensoren (16) aufgenommenen Verbundwerkstoffabfall- und Prozessparametern eine auf einer Recheneinheit (18) hinterlegte Prozesssimulation durchgeführt wird, wonach durch Parametervariation die virtuellen Betriebsparameter optimiert werden und gefundene Lösungen zur Regelung des Zerkleinerungsaggregats (2), der Betriebsparameter der Temperierzone (3) und des Umformaggregates (4) mit der Regelungseinheit (17) verwendet werden.

## Claims

1. Device for processing composite material waste, in particular carbon-fiber-reinforced waste, comprising a comminution unit (2) for the composite material waste, a downstream temperature-control zone (3) for temperature-controlling the comminuted composite material waste, and a forming unit (4) for producing composite material waste compacts, **characterized in that** the comminution unit (2), the temperature-control zone (3) and the forming unit (4) are arranged in an at least substantially hermetically sealed and transportable working space (1), wherein the working space (1) is substantially hermetically separated from its surroundings and is interrupted by airlocks or flaps (14) for loading and unloading, or by openings for fresh-air and exhaust-air lines (7a), and **in that** the temperature in the temperature-control zone (3) is adjustable.

2. Device for processing composite material waste according to claim 1, **characterized in that** a particle separator (6) for separating the dusts generated during comminution is assigned to the comminution unit (2), wherein a conveying line (5) is connected to the particle separator (6) in order to separate the dust produced during comminution.

3. Device for processing composite material waste according to claim 2, **characterized in that** the particle separator (6) comprises a metering device (8) for adding the separated particles, optionally mixed with a binder, to the comminuted composite material waste.

4. Device for processing composite material waste according to any one of claims 1 to 3, **characterized in that** the temperature-control zone comprises a conveying device (10) for conveying the comminuted composite material waste through the temperature-control zone (3) to the forming unit (4).

5. Device for processing composite material waste according to any one of claims 1 to 4, **characterized in that** a storage space (13), connected to the working space (1) via an airlock, is provided for the intermediate storage of the composite material waste compacts.

6. Device for processing composite material waste according to any one of claims 2 to 5, **characterized in that** sensors (16), connected to a control unit, for measuring composite material waste parameters and process parameters are assigned to the comminution unit (2), the temperature-control zone (3) and the particle separator (6), wherein the operating parameters at least of the comminution unit (2), in the temperature-control zone (3), and of the forming unit (4) are controllable via the control unit as a function of the measured process parameters.

7. Method for processing composite material waste, in particular carbon-fiber-reinforced waste, wherein, in a first process step, the composite material waste is comminuted by a comminution unit (2), subsequently temperature-controlled in a temperature-control zone (3), and thereafter pressed by a forming unit (4) into composite material waste compacts, **characterized in that** the process steps of the comminution unit (2), the temperature-control zone (3) and the forming unit (4) are carried out in an at least substantially hermetically sealed and transportable working space (1), wherein the working space (1) is substantially hermetically separated from its surroundings and is interrupted by airlocks or flaps (14) for loading and unloading, or by openings for fresh-air and exhaust-air lines (7a), and **in that** the temperature in the temperature-control zone (3) is adjustable

8. Method for processing composite material waste according to claim 7, **characterized in that** the dust generated during comminution of the composite material waste is extracted and separated in a particle separator (6), whereupon the separated dust is added to comminuted composite material waste via a metering device (8).

9. Method for processing composite material waste according to claim 7 or 8, **characterized in that** the operating parameters at least of the comminution unit (2), in the temperature-control zone (3), and of the forming unit (4) are controlled via a control unit (17) as a function of composite material waste parameters and process parameters detected by sensors (16).

10. Method for processing composite material waste according to claim 9, **characterized in that**, on the basis of the composite material waste parameters and process parameters detected by the sensors (16), a process simulation stored on a computing unit (18) is carried out, whereupon the virtual operating parameters are optimized by parameter variation and the solutions found are used, by means of the control unit (17), for controlling the comminution unit (2), the operating parameters of the temperature-control zone (3), and the forming unit (4).

## Revendications

1. Dispositif pour le traitement de déchets de matériaux composites, en particulier de déchets renforcés de fibres de carbone, comprenant un groupe de broyage (2) pour les déchets de matériaux composites, une zone de tempérage (3) raccordée en aval pour réguler la température des déchets de matériaux composites broyés, et avec un groupe de formage (4) pour la production d'agglomérés de déchets de matériaux composites, **caractérisé en ce que** le groupe de broyage (2), la zone de tempérage (3) et le groupe de formage (4) sont disposés dans un espace de travail (1) au moins essentiellement hermétique et transportable, l'espace de travail (1) étant séparé de manière essentiellement hermétique de son environnement et percé de sas ou de clapets (14) pour le chargement et le déchargement, ou d'ouvertures pour des conduits d'air frais ou conduits d'évacuation d'air (7a), et **en ce que** la température dans la zone de tempérage (3) est réglable.

2. Dispositif pour le traitement de déchets de matériaux composites selon la revendication 1, **caractérisé en ce qu'**un séparateur de particules (6) est associé au groupe de broyage (2) pour séparer les poussières produites lors du broyage, une conduite de transport (5) étant reliée au séparateur de particules (6) afin de séparer la poussière produite lors du broyage.

3. Dispositif pour le traitement de déchets de matériaux composites selon la revendication 2, **caractérisé en ce que** le séparateur de particules (6) comporte un dispositif de dosage (8) pour ajouter les particules séparées, éventuellement mélangées à un liant, aux déchets de matériaux composites broyés.

4. Dispositif pour le traitement de déchets de matériaux composites selon l'une des revendications 1 à 3, **caractérisé en ce que** la zone de tempérage comprend un dispositif de transport (10) pour transporter les déchets de matériaux composites broyés à travers la zone de tempérage (3) vers le groupe de formage (4).

5. Dispositif pour le traitement de déchets de matériaux composites selon l'une des revendications 1 à 4, **caractérisé en ce qu'**un espace de stockage (13) relié à l'espace de travail (1) par un sas est prévu pour le stockage intermédiaire des agglomérés de déchets de matériaux composites.

6. Dispositif pour le traitement de déchets de matériaux composites selon l'une des revendications 2 à 5, **caractérisé en ce que** des capteurs (16) reliés à une unité de régulation sont associés au groupe de broyage (2), la zone de tempérage (3) et le séparateur de particules (6) pour mesurer les paramètres de déchets de matériaux composites et les paramètres de processus, les paramètres de fonctionnement au moins du groupe de broyage (2), de la zone de tempérage (3) et du groupe de formage (4) pouvant être régulés en fonction des paramètres de processus mesurés via l'unité de régulation.

7. Procédé de traitement de déchets de matériaux composites, en particulier de déchets renforcés de fibres de carbone, dans lequel les déchets de matériaux composites sont broyés dans une première étape du procédé par un groupe de broyage (2), tempérés ensuite dans une zone de tempérage (3), puis agglomérés par un groupe de formage (4) en agglomérés de déchets de matériaux composites, **caractérisé en ce que** les étapes de procédé du groupe de broyage (2), de la zone de tempérage (3) et du groupe de formage (4) sont réalisées dans un espace de travail (1) au moins essentiellement hermétique et transportable, l'espace de travail (1) étant séparé de manière essentiellement hermétique de son environnement et étant percé de sas ou de clapets (14) pour le chargement et le déchargement, ou d'ouvertures pour conduits d'air frais ou conduits d'évacuation de l'air (7a), et **en ce que** la température dans la zone de tempérage est réglable.

8. Procédé de traitement de déchets de matériaux composites selon la revendication 7, **caractérisé en ce que** la poussière générée lors du broyage des déchets de matériaux composites est aspirée et séparée dans un séparateur de particules (6), après quoi la poussière séparée est ajoutée aux déchets de matériaux composites broyés via un dispositif de dosage (8).

9. Procédé de traitement de déchets de matériaux composites selon la revendication 7 ou 8, **caractérisé en ce que** la régulation des paramètres de fonctionnement au moins du groupe de broyage (2), dans la zone de tempérage (3) et du groupe de formage (4) s'effectue via une unité de régulation (17) en fonction des paramètres de déchets de matériaux composites et des paramètres de processus enregistrés par des capteurs (16).

10. Procédé de traitement de déchets de matériaux composites selon la revendication 9, **caractérisé en ce que**, sur la base des paramètres de déchets de matériaux composites et des paramètres de processus enregistrés par les capteurs (16), une simulation de processus stockée sur une unité de calcul (18) est effectuée, après quoi les paramètres de fonctionnement virtuels sont optimisés par variation des paramètres et les solutions trouvées sont utilisées avec l'unité de régulation (17) pour réguler le groupe de broyage (2), les paramètres de fonctionnement de la zone de tempérage (3) et du groupe de formage (4).
